# EUROPÄISCHE PATENTANMELDUNG

(11) **EP 3 883 075 A1**
(43) Veröffentlichungstag der Anmeldung: **22.09.2021**
(21) Anmeldenummer: 21163145.2
(22) Anmeldetag: 17.03.2021
(51) Int. Cl.: H02G 3/22, F16L 5/10

(54) **KABELEINFÜHRUNG**

(30) Priorität: 17.03.2020 CH 3052020
(71) Anmelder: Agro AG, 5502 Hunzenschwil (CH)
(72) Erfinder: EGGENSCHWILER, Martin, 4712 Laupersdorf (CH); ROSAMILIA, Valerio, 5502 Hunzenschwil (CH)
(74) Vertreter: Rentsch Partner AG

(57) **Zusammenfassung**

Die Erfindung betrifft eine Kabeleinführung mit einer rahmenförmigen Spannvorrichtung zur Befestigung der Kabeleinführung (1) an einer Wandung sowie mindestens eine Durchführeinheit (3) zum Durchführen von Kabeln, Leitungen oder Rohren durch eine Öffnung in der Wandung. Die Durchführeinheit (3) umfasst ein Klemmelement (4) mit mindestens einer ersten Durchführöffnung (5) in axialer Richtung (x), wobei das Klemmelement (4) entlang der ersten Durchführöffnung (5) in ein erste Klemmhälfte (6) und eine dazu komplementäre zweite Klemmhälfte (7) unterteilbar ist. In der ersten Durchführöffnung (5) ist ein Dichtelement (8) montierbar, welches in einem zusammengebauten Zustand eine in die axiale Richtung erstreckende zweite Durchführöffnung (9) zum Einlegen des Kabels, der Leitung oder des Rohres aufweist. Das Dichtelement (8) umfasst mehrere ineinander stapelbare Schichten, sodass die zweite Durchführöffnung (9) an unterschiedliche Durchmesser anpassbar ist.

## Beschreibung

Die Erfindung liegt auf dem Gebiet der Kabeleinführungen zum Einführen oder Durchführen eines oder mehrerer Kabel durch eine Wandung.

Kabeleinführungen zum Durchführen und Abdichten von mehreren Kabeln durch eine Öffnung in z.B. einer Gehäusewandung eines elektrischen Gerätes sind aus dem Stand der Technik bekannt. Zum Durchführen von mehreren Kabeln sind Kabeleinführungen bekannt, die eine an dem Gehäusedurchbruch befestigbare Spannvorrichtung, wie beispielsweise einem rechteckigen steifen Rahmen, aufweisen mit darin verbauten verformbaren Durchführeinheiten, welche die einzuführenden Kabel umgeben und abdichten. Die Durchführeinheiten sind in der Regel aus einem elastischen Material zur Montage innerhalb einer Öffnung der Spannvorrichtung geformt, wobei die Durchführeinheiten eine elastische Anpassung an ein Kabel einer bestimmten Grösse erlaubt. Die Durchführeinheiten umfassen in der Regel zwei komplementäre Hälften mit einer Durchführöffnung. Es ist bekannt die Durchführöffnung derart zu gestalten, dass eine Vielzahl von axial beabstandeten Stegen und Aussparungen vorhanden sind um eine elastische Anpassung an das durchgeführte Kabel zu ermöglichen. Der Kabeldurchmesser kann hierbei nur innerhalb spezifischer Grenzen variieren. Ein Beispiel einer solchen Kabeleinführung ist die EP0236728**.**

Um die Anpassung an verschiedene Kabeldurchmesser weiter zu verbessern wurden Kabeleinführungen bekannt, wie beispielsweise die EP2396863**,** bei der die Durchführeinheit abziehbare, zylindrische Schichten umfasst. Die WO10090581A1 offenbart weiter eine Durchführeinheit mit mehreren abziehbaren Schichten, wobei benachbarte Schichten miteinander verbunden sind.

Die EP2593700 offenbart eine ähnliche Vorrichtung, bei der die Schichten ebenfalls voneinander lösbar angeordnet sind. Das Abschälen vereinzelter Schichter ermöglicht ein Einstellen an unterschiedliche Aussendurchmesser der Kabel. Darüber hinaus sind die Schichten gewellt, sodass eine reduzierte Kontaktfläche zu den durchgeführten Leitungen entsteht und die nötige Druckkraft zum Abdichten reduziert wird.

Die aus dem Stand der Technik bekannten Kabeleinführungen sind oftmals aufwendig an den Kabeldurchmesser anzupassen, da eine abgetrennte Schicht in der Regel nicht wieder derart platziert werden kann, dass eine verlässliche Dichtwirkung erzielt wird. Weiterhin sind die bekannten Kabeleinführungen aufwendig zu installieren und benötigen eine Vielzahl von Installationsschritten um diese dichtend einzubauen.

Eine Aufgabe der Erfindung besteht darin eine verbesserte, an die jeweilige Anwendung flexibel anpassbare Kabeleinführung bereitzustellen. Eine weitere Aufgabe der Erfindung ist es eine Kabeleinführung mit einer verbesserten Dichtwirkung bereitzustellen.

Eine erfindungsgemässe Kabeleinführung ermöglicht das Einführen oder das Durchführen von mindestens einem Kabel durch eine Öffnung in einer Wandung. Die Wandung kann eine Gebäudewand, eine Gehäusewandung eines elektrischen Gerätes, eine Wand eines Schiffes oder ähnliches sein. Die Kabeleinführung umfasst eine Spannvorrichtung zur Befestigung der Kabeleinführung an der Wandung sowie ein oder mehrere in der Spannvorrichtung angeordnete Durchführeinheiten zum Durchführen von Kabeln, Leitungen oder Rohren durch die Öffnung in der Wandung. Die Spannvorrichtung weist mit Vorzug eine Öffnung auf, welche von einem Rahmen umgeben ist. In der Öffnung der Spannvorrichtung können komprimierbare Durchführeinheiten angeordnet sein, welche durch Spannen der Spannvorrichtungen verformt werden und so die durch diese durchgeführten Leitungen, Kabel oder Rohre abgedichtet.

Die mindestens eine Durchführeinheit umfasst hierbei ein (äusseres) Klemmelement und ein (inneres) Dichtelement. Das Klemmelement weist mindestens eine erste Durchführöffnung in axialer Richtung auf. In dieser ist das Dichtelement angeordnet. Ein gutes Material für das Klemmelement und/oder das Dichtelement ist ein Kunststoff, jedoch sind auch andere Materialien verwendbar. Das Dichtelement ist jedoch mit Vorteil weichelastischer als das Klemmelement ausgestaltet. Je nach Anwendung kann das Klemmelement und/oder das Dichtelement alternativ oder ergänzend intumeszierende Materialen, wie z.B. Blähgraphit oder ähnliches, umfassen. Für eine einfache Montage kann das Klemmelement entlang einer Trennebene in eine erste Klemmhälfte und eine dazu komplementäre zweite Klemmhälfte unterteilbar sein. Die Trennebene kann hierbei durch die erste Durchführöffnung, insbesondere durch die Mittelachse der ersten Durchführöffnung, verlaufen. Das in der mindestens einen ersten Durchführöffnung montierbare Dichtelement weist im zusammengebauten Zustand eine sich in die axiale Richtung erstreckende zweite Durchführöffnung zum Einlegen des Kabels, der Leitung oder des Rohres auf. Die zweite Durchführöffnung ist mit Vorteil konzentrisch zur ersten Durchführöffnung angeordnet. Das Dichtelement kann ebenfalls entlang der gleichen, oder einer anderen Trennebene in zwei Hälften, einer ersten Dichtelementhälfte und eine dazu komplementäre zweite Dichtelementhälfte, unterteilbar sein.

Für eine gute Anpassbarkeit der zweiten Durchführöffnung an das jeweilige durchgeführte Kabel, Leitung oder Rohr kann das Dichtelement mehrere ineinander stapelbare Schichten aufweisen. Mit Vorteil sind die stapelbaren Schichten dünnwandig ausgestaltet. Die stapelbaren Schichten können hierbei beliebig wiederholbar aufeinandergelegt, bzw. voneinander getrennt werden. Dies ermöglicht im Gegensatz zu den aus dem Stand der Technik bekannten abziehbaren Schichten eines Durchführelementes eine einfachere Montage ohne Risiko zu viele Schichten abzutragen und eine Öffnung mit einem zu grossen Durchmesser zu erzeugen. Die stapelbaren Schichten können weiterhin ineinander faltbar ausgestaltet sein. Dies wird begünstigt durch mindestens eine Verbindungsstelle zwischen den jeweiligen benachbarten Schichten. Die Verbindungsstelle kann ein Scharnier oder ein Band sein.

Mit Vorteil sind die mehreren faltbaren Schichten an den Verbindungsstellen voneinander trennbar ausgestaltet. Je nach Ausgestaltung kann die mindestens eine Verbindungsstelle an einem axialen Ende der Dichtelementhälften oder entlang der Längskante der Dichtelementhälften angeordnet sein. Bei einer Anordnung von mehreren Verbindungsstellen an den axialen Enden, können diese alternierend zwischen einem ersten axialen Ende und einem diesem gegenüberliegenden zweiten axialen Ende der jeweiligen Dichtelementhälfte angeordnet sein.

Für eine korrekte Positionierung des Dichtelementes in dem Klemmelement ist es vorteilhaft, wenn die erste Durchführöffnung mehrere in axialer Richtung hintereinander angeordnete, radial umlaufende Taschen aufweist. Mit Vorteil ist jede Tasche in axialer Richtung von zwei umlaufenden Stegen begrenzt. Die Stege, respektive die Taschen, des Klemmelementes bilden im zusammengebauten Zustand einen Formschluss, bzw. einen Hinterschnitt in axialer Richtung mit dem Dichtelement, welches an seiner Aussenseite zu den Taschen korrespondierende Ausbuchtungen aufweisen kann. Die mindestens eine Tasche des Klemmelements ist mit Vorteil ringförmig ausgestaltet und verläuft in einem zusammengebauten Zustand des Klemmelements über die Trennebene von der ersten Klemmhälfte in die zweite Klemmhälfte. Ebenfalls ist die mindestens eine Ausbuchtung des Dichtelements radial umlaufend ausgebildet, sodass diese gemeinsam von der ersten und der zweiten Dichtelementhälfte gebildet wird. Die Ausbuchtungen können somit nicht nur das Dichtelement in dem Klemmelement positionieren, sondern ebenfalls die beiden Dichtelementhälften zueinander.

Bei einer dünnwandigen Ausgestaltung der stapelbaren Schichten folgen die jeweiligen Schichten mit Vorteil der Kontur der erste Durchführöffnung, bzw. der jeweiligen benachbarten, äusseren Schicht. Mit Vorteil greifen die mehreren stapelbaren Schichten ohne Zwischenraum ineinander. Die dünnwandigen, stapelbaren Schichten können somit an ihrer Innenseite (zur Mittelachse der zweiten Durchführöffnung hingewandte Seite der Schicht) ebenfalls die um das Dichtelement umlaufenden Taschen und dazwischenliegenden Stege aufweisen. Die Dünnwandigkeit bewirkt, dass die Taschen an der Innenseite einer Schicht auf der Aussenseite derselben Schicht (von der Mittelachse der zweiten Durchführöffnung weggewandte Seite der Schicht) eine korrespondierende Ausbuchtung formt. Diese Ausbuchtung kann in die Tasche der benachbarten weiter aussenliegenden Schicht eingreifen und die Schichten somit zueinander positionieren. Die Ausbuchtungen der äussersten Schicht greifen zumindest bereichsweise in die Taschen der ersten Durchführöffnung ein. Die Taschen der Schichten werden bei dieser Ausgestaltung mit weiter innenliegender Position der Schicht in ihrer axialen Länge zunehmend kleiner. Mit Vorteil ist zwischen den benachbarten Schichten kein Hohlraum vorhanden. Die beiden radial innenliegenden Schichten, welche gemeinsam die zweite Durchführöffnung umgeben, weisen mit Vorteil ebenfalls an der Innenseite mehrere radial umlaufende Taschen auf. Die zwischen den Taschen angeordneten Stege dienen zur Auflage an einem eingebauten Kabel. Die Taschen bilden gemeinsam mit dem eingebauten Kabel, einer Leitung oder eines Rohres in axialer Richtung hintereinandergeschaltete (Dicht-)Kammern, welche eine Art Labyrinthdichtung bilden. Ein solcher Aufbau der Schichten hat im Gegensatz zu zylindrisch ausgestalteten Schichten eine verbesserte Dichtwirkung.

Mit Vorteil umfasst die Kabeleinführung mindestens eine Verdrehsicherung. Die Verdrehsicherung verhindert, dass das Dichtelement in Bezug zu dem Klemmelement verrutscht und/oder dass die verschiedenen Schichten des Dichtelementes zueinander verrutschen. Letzteres bewirkt u.a., dass die jeweiligen Dichtelementhälften gut positioniert werden und eine sauber ausgerichtete Trennebene gebildet wird. Dies wirkt sich allgemein positiv auf die Dichtwirkung der Durchführeinheit aus. Die Verdrehsicherung kann zwischen den zu sichernden Teilen derart hergestellt werden, dass das eine Teil eine (lokale) Vertiefung aufweist, in welche eine entsprechende (lokale) Ausbuchtung des anderen Teils eingreift. Die Vertiefung kann punktuell im Bereich der ersten Durchführöffnung angeordnet sein oder in Form einer sich in die axiale Richtung erstreckenden Nut ausgebildet sein. Mit Vorteil sind jedoch multiple Verdrehsicherungen vorhanden. Beispielsweise kann eine Verdrehsicherung innerhalb einer umlaufenden Tasche der ersten Durchführöffnung und/oder der jeweiligen Schicht angeordnet sein. Bei dieser Anordnung hat die Präsenz der Verdrehsicherungen minimalen Einfluss auf eine fluidische Kommunikation zwischen den einzelnen Taschen, respektive den von diesen gebildeten Dichtkammern. Bei einer Teilung des Dichtelements kann mindestens eine Verdrehsicherung in jeder Dichtelementhälfte vorhanden sein.

Für eine weitere Verbesserung der Dichtwirkung kann die erste Klemmhälfte und die zweite Klemmhälfte ein Positioniermittel zum gegenseitigen Positionieren der Klemmhälften umfassen. Das Positioniermittel dient dazu einen Formschluss zwischen der ersten und der zweiten Klemmhälfte zu bilden. Mit Vorteil sind die Positioniermittel in axialer Richtung neben der mindestens einen ersten Durchführöffnung angeordnet. Mit Vorzug sind die Positioniermittel in der Trennebene angeordnet. Falls eine Durchführeinheit mehr als eine (erste) Durchführöffnung aufweist, können die Positioniermittel alternativ oder ergänzend ebenfalls zwischen den Durchführöffnungen angeordnet sein. Mit Vorteil ist das Positioniermittel eine Feder-Nut Verbindung und/oder ein ineinandergreifendes, zackenartiges Profil. Bei einer Feder-Nut Verbindung kann die eine Klemmhälfte mindestens eine Feder aufweisen, welche im zusammengebauten Zustand des Klemmelementes in eine entsprechende Nut auf der gegenteiligen Klemmhälfte eingreift. Alternativ oder ergänzend können wellen- oder zackenartige Profile verwendet werden, welche jeweils auf der ersten und der zweiten Klemmhälfte angeordnet sind und welche in einem zusammengebauten Zustand ineinandergreifen. Hierbei kann sich das entsprechende Profil zumindest bereichsweise entlang der jeweiligen äusseren Längskanten der beiden Klemmhälften erstrecken. Wenn sich das Profil nur über einen bestimmten Bereich der Längskante erstreckt, ist es vorteilhaft, wenn an einer Längskante zwei gegenüberliegende Bereiche vorgesehen sind, welche in der Nähe des axialen Endes der Kabeleinführung angeordnet sind.

Je nach Anwendung kann die Kabeleinführung weiter einen Verschlusseinsatz umfassen, welcher in die zweite Durchführöffnung eingelegt werden kann und die Kabeleinführung dichtend gegen aussen verschliesst, wenn kein Kabel, Leitung oder Rohr durch diese Durchführöffnung eingeführt wird. Der Verschlusseinsatz ist mit Vorteil einteilig geformt und weist umlaufende Ausbuchten auf, welche in die Taschen der zweiten Durchführöffnung eingreifen. Auf diese Weise wird eine Labyrinthdichtung gebildet und die ungenutzte (zweite) Durchführöffnung effektiv abdichtet.

Je nach Anwendung können multiple Durchführeinheiten miteinander über je eine Dünnstelle miteinander verbunden werden, sodass eine zusammenhängende Reihe von Durchführeinheiten gebildet wird. Eine Durchführeinheit kann, wie oben beschrieben, hierbei eine oder mehrere (erste und zweite) Durchführöffnungen umfassen. Dies erleichtert die Montage von multiplen Durchführeinheiten in einer Spannvorrichtung.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Durchführeinheit für eine Kabeleinführung gemäss der Erfindung in einem auseinandergebauten Zustand in einer perspektivischen Ansicht;
- Fig. 2: Eine Kabeleinführung gemäss der Erfindung in einem zusammengebauten Zustand in einer Ansicht von vorne;
- Fig. 3: Eine erste erfindungsgemässe Variante einer Dichtelementhälfte gemäss der Erfindung in einer perspektivischen Ansicht;
- Fig. 4: Eine zweite erfindungsgemässe Variante einer Dichtelementhälfte gemäss der Erfindung in einer perspektivischen Ansicht;
- Fig. 5: Eine erste erfindungsgemässe Variante eines Klemmelementes gemäss der Erfindung in einer perspektivischen Ansicht;
- Fig. 6: Eine zweite erfindungsgemässe Variante eines Klemmelementes gemäss der Erfindung in einer perspektivischen Ansicht;
- Fig. 7: Eine dritte erfindungsgemässe Variante eines Klemmelementes gemäss der Erfindung in einer perspektivischen Ansicht.

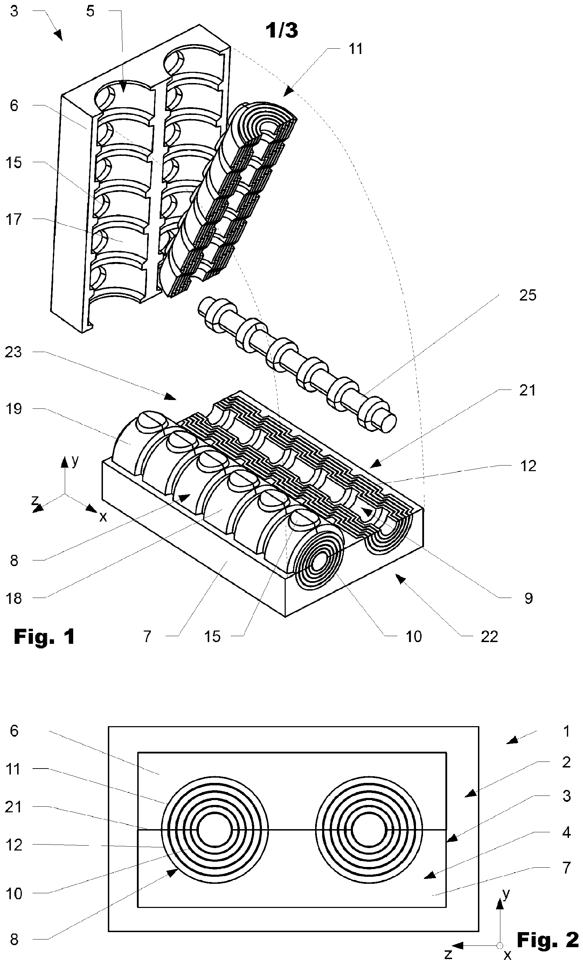

Eine erfindungsgemässe Kabeleinführung 1 ist schematisch in **Figur 2** gezeigt. Die Kabeleinführung 1 umfasst eine Spannvorrichtung 2 und mindestens eine darin angeordnete Durchführeinheit 3. Die Durchführeinheit umfasst ein (äusseres) Klemmelement 4 und zwei darin angeordnete (innere) Dichtelemente 8. In dem Klemmelement 4 sind zwei erste Durchführöffnungen 5 angeordnet, welche sich in die axiale Richtung (x-Richtung) erstrecken. Eine andere Anzahl von (ersten) Durchführöffnungen 5 ist ebenfalls denkbar. Die Dichtelemente 8 sind je in einer ersten Durchführöffnung 5 des Klemmelementes 4 angeordnet. Entlang dieser Durchführöffnung 5 und entlang einer Trennebene 21 (x-z Ebene) ist das Klemmelement 4 in ein erste Klemmhälfte 6 und eine dazu komplementäre zweite Klemmhälfte 7 teilbar. Entlang derselben Trennebene 21 sind ebenfalls die Dichtelemente 8 je in eine erste Dichtelementhälfte 11 und eine zweite Dichtelementhälfte 12 teilbar. In einem Dichtelement 8 verläuft zudem eine zweite Durchführöffnung 9, durch welche mittig die Trennebene 21 verläuft. Jede Dichtelementhälfte 11, 12 umfasst mehrere stapelbare Schichten 10. Je nachdem wie viele Schichten aufeinandergestapelt sind, verändert sich der innere Durchmesser der zweiten Durchführöffnung 9, sodass dieser einfach an verschiedene Kabel, Leitungen oder Rohre angepasst werden kann.

Dieser Aufbau ist ebenfalls gut in **Figur 1** zu sehen, welche die Durchführeinheit 3 in einem auseinandergebauten Zustand und in einer perspektivischen Ansicht zeigt. In **Figur 1** ist zudem erkennbar, dass die erste Durchführöffnung 5 mehrere in axialer Richtung hintereinander angeordnete und in radialer Richtung umlaufende Taschen 17 aufweist. Die Taschen 17 sind durch radial umlaufende Stege 24 voneinander getrennt. Die jeweiligen dünnwandigen Schichten 10 der Dichtelementhälften folgen der Kontur der ersten Durchführöffnung 5 und weisen entsprechend an ihren jeweiligen Aussenseiten 19 radial umlaufende Ausbuchtungen 18 auf, welche entsprechende Taschen 17 auf den Innenseiten (zur zweiten Durchführöffnung hingewandte Seiten) der Schichten 10 bilden. Entsprechend weist die zweite Durchführöffnung 9 ebenfalls mehrere in axialer Richtung hintereinander angeordnete, radial umlaufende Taschen 17 auf. Diese dienen als Labyrinthdichtung für ein eingeführtes Kabel, Rohr oder Leitung.

Damit die Dichtelementhälften 11, 12 nicht verrutschen umfasst die Durchführeinheit 3, respektive das Klemmelement 4 und das Dichtelement 8, mindestens eine Verdrehsicherung 15. In der gezeigten Variante sind mehrere Verdrehsicherungen 15 in axialer Richtung verteilt angeordnet. Die Verdrehsicherungen 15 sind hierbei in den Taschen 17 der ersten Durchführöffnung 5 angeordnet. Die Verdrehsicherung 15 verhindert eine radiale Fehlstellung des Dichtelementes 8 in dem Klemmelement 4. Die wird im gezeigten Fall durch eine Welle-Nut Verbindung zwischen diesen beiden Teilen ermöglicht. Es ist von Vorteil, dass bei einem zweigeteilten Dichtelement 8 in einer erste und eine zweite Dichtelementhälfte 11, 12 beide Dichtelementhälften 11, 12 jeweils eine Verdrehsicherung 15 gegen die jeweilige Klemmhälfte 6, 7 aufweisen. Weiterhin ist es möglich, dass die jeweiligen Schichten 10 untereinander eine Verdrehsicherung 15 aufweisen. Je nach Anwendung kann die Kabeleinführung weiter einen Verschlusseinsatz 25 umfassen, welcher in die zweite Durchführöffnung 9 eingelegt werden kann und die Kabeleinführung 1 dichtend gegen aussen verschliesst, wenn kein Kabel, Leitung oder Rohr durch diese Durchführöffnung eingeführt wird.

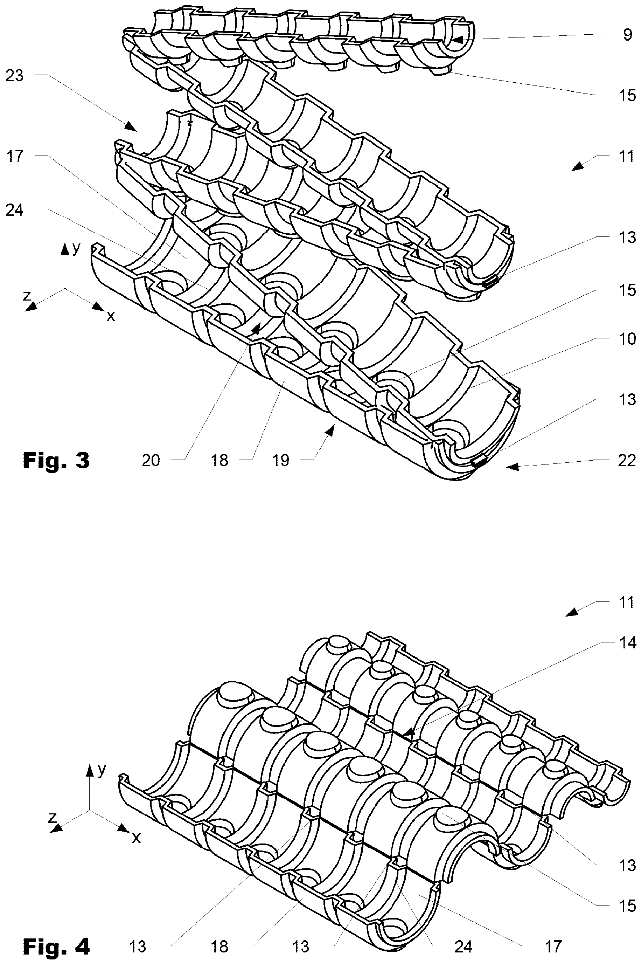

**Figur 3** und **Figur 4** zeigen jeweils erfindungsgemässe Varianten der Dichtelementhälften 11, 12 in einer perspektivischen Ansicht mit den (auseinandergefalteten) Schichten 10. Hier ist erkennbar, wie die dünnwandigen Schichten 10 jeweils an ihrer Innenseite 20 Taschen 17 aufweisen, in welche Ausbuchtungen 18 der innenliegenden Schicht 10 eingreifen. Ebenfalls ist die zuvor beschriebene Verdrehsicherung 15 erkennbar, welche zwischen den verschiedenen Schichten 10 vorliegt. Auch eine abgetrennte Schicht 10 kann verlässlich und wiederholbar auf die vorherige Schicht 10 gestapelt werden. D.h. ein Entfernen der Schicht 10 und anschliessend wieder Hinzufügen der Schicht 10 ist ohne Probleme möglich. Für einen gut ineinander faltbaren Aufbau der Dichtelementhälften 11, 12 ist es vorteilhaft, wenn die stapelbaren Schichten 10 über mindestens eine Verbindungsstelle 13 mit der jeweiligen benachbarten Schicht 10 verbunden ist. Die Verbindungsstellen 13 können hierbei beispielsweise an einem axialen Ende der Dichtelementhälften 11,12 angeordnet sein, wie in **Figur 3** zu sehen, oder entlang der Längskante 14 der Dichtelementhälften 11,12 angeordnet sein, wie in **Figur 4** zu sehen. Bei der Variante, bei der die Verbindungsstellen 13 an den axialen Enden 22, 23 angeordnet sind **(****Figur 3****),** sind diese mit Vorteil alternierend zwischen dem ersten axialen Ende 22 und dem diesem gegenüberliegenden zweiten axialen Ende 23 der jeweiligen benachbarten Dichtelementhälften 11, 12 angeordnet.

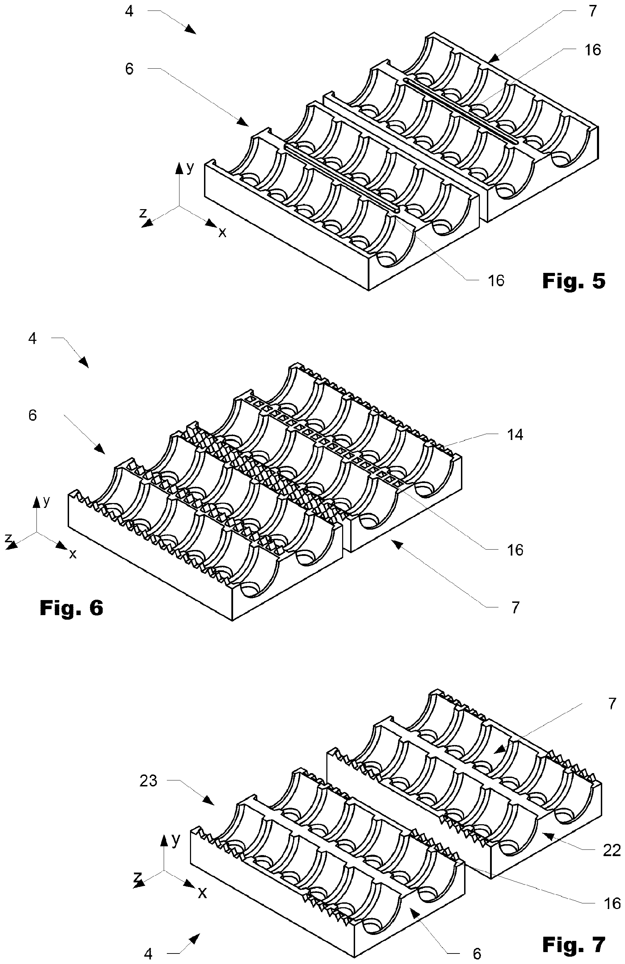

**Figur 5** bis **Figur 7** zeigen verschiedene erfindungsgemässe Varianten des Klemmelementes 4 in einer perspektivischen Ansicht. Es ist erkennbar, dass an den jeweiligen Klemmhälften 6, 7 ein Positioniermittel 16 vorhanden ist. Das Positioniermittel 16 bildet einen Formschluss zwischen der ersten und der zweiten Klemmhälfte 6, 7. In der in **Figur 5** gezeigten Variante ist das Positioniermittel 16 eine Feder-Nut Verbindung. Hierbei weist die eine Klemmhälfte 6, eine Feder auf, welche im zusammengebauten Zustand des Klemmelementes 4 in eine entsprechende Nut auf der gegenteiligen (zweiten) Klemmhälfte 7 eingreift. Es können auch mehrere Feder-Nut Verbindungen angebracht werden. Mit Vorteil sind diese in axialer Richtung neben der mindestens einen ersten Durchführöffnung 5 angeordnet. Falls eine Durchführeinheit 3 mehr als eine (erste) Durchführöffnung 5 aufweist, können die Positioniermittel 16 alternativ oder ergänzend ebenfalls zwischen den Durchführöffnungen 5 angeordnet sein. In **Figur 6** und **Figur 7** sind alternative Ausführungsformen des Positioniermittels 16 gezeigt. Es ist jedoch ebenfalls denkbar, dass die unterschiedlichen Ausführungsformen kombiniert werden können. Die gezeigten Positioniermittel 16 entsprechen korrespondierenden sägezahnartigen (zick-zack) Profilen, welche jeweils auf der ersten und der zweiten Klemmhälfte 6, 7 angeordnet sind und welche in einem zusammengebauten Zustand ineinandergreifen. Hierbei kann sich das entsprechende gezackte Profil zumindest bereichsweise entlang der jeweiligen äusseren Längskanten der beiden Klemmhälften 6, 7 erstrecken. Wenn sich das Profil nur über einen bestimmten Bereich der Längskante 14 erstreckt, ist es vorteilhaft, wenn an einer Längskante 14 zwei Bereiche vorgesehen sind, welche in der Nähe des ersten und des zweiten (axialen) Endes 22, 23 angeordnet sind (vgl. **Figur 7**)**.**

**LISTE DER BEZUGSZEICHEN**

| | | | |
|---|---|---|---|
| 1 | Kabeleinführung | 14 | Längskante |
| 2 | Spannvorrichtung | 15 | Verdrehsicherung |
| 3 | Durchführeinheit | 16 | Positioniermittel |
| 4 | Klemmelement | 17 | Taschen |
| 5 | Erste Durchführöffnung | 18 | Ausbuchtungen |
| 6 | Erste Klemmhälfte | 19 | Aussenseite |
| 7 | Zweite Klemmhälfte | 20 | Innenseite |
| 8 | Dichtelement | 21 | Trennebene |
| 9 | Zweite Durchführöffnung | 22 | Erstes axiales Ende |
| 10 | Stapelbare Schicht(en) | 23 | Zweites axiales Ende |
| 11 | Erste Dichtelementhälfte | 24 | Stege |
| 12 | Zweite Dichtelementhälfte | 25 | Verschlusseinsatz |
| 13 | Verbindungsstellen | | |

## Patentansprüche

1. Kabeleinführung (1) umfassend:
a. eine rahmenförmige Spannvorrichtung (2) zur Befestigung der Kabeleinführung (1) an einer Öffnung in einer Wandung;
b. mindestens eine Durchführeinheit (3) zum Durchführen von Kabeln, Leitungen oder Rohren durch die Öffnung in der Wandung, mit
i. einem Klemmelement (4) mit mindestens einer ersten Durchführöffnung (5) in axialer Richtung (x), wobei das Klemmelement (4) entlang der ersten Durchführöffnung (5) in eine erste Klemmhälfte (6) und eine dazu komplementäre zweite Klemmhälfte (7) unterteilbar ist;
ii. ein in der mindestens einen ersten Durchführöffnung (5) montierbares Dichtelement (8) mit einer im zusammengebauten Zustand sich darin in die axiale Richtung erstreckenden zweiten Durchführöffnung (9) zum Einlegen des Kabels, der Leitung oder des Rohres, wobei das Dichtelement (8) mehrere ineinander stapelbare Schichten (10) umfasst, sodass die zweite Durchführöffnung (9) an unterschiedliche Durchmesser anpassbar ist.

2. Kabeleinführung (1) gemäss Patentanspruch 1, **dadurch gekennzeichnet, dass** das Dichtelement (8) entlang der zweiten Durchführöffnung (9) in eine erste Dichtelementhälfte (11) und eine dazu komplementäre zweite Dichtelementhälfte (12) unterteilbar ist.

3. Kabeleinführung (1) gemäss einem der vorangehenden Patentansprüche, **dadurch gekennzeichnet, dass** die stapelbaren Schichten (10) ineinander faltbar ausgestaltet sind.

4. Kabeleinführung (1) gemäss Patentanspruch 3, **dadurch gekennzeichnet, dass** die stapelbaren Schichten (10) jeweils über mindestens eine Verbindungsstelle (13) mit einer benachbarten Schicht (10) verbunden sind.

5. Kabeleinführung (1) gemäss Patentanspruch 4, **dadurch gekennzeichnet, dass** die stapelbaren Schichten (10) an den jeweiligen Verbindungsstellen (13) voneinander trennbar ausgestaltet sind.

6. Kabeleinführung (1) gemäss einem der vorangehenden Patentansprüche 4 oder 5, **dadurch gekennzeichnet, dass** die jeweiligen Verbindungsstellen (13) an einem ersten axialen Ende (22) und/oder einem diesem gegenüberliegenden zweiten axialen Ende (23) des Dichtelements (8) angeordnet sind.

7. Kabeleinführung (1) gemäss Patentanspruch 2 und 6, **dadurch gekennzeichnet, dass** die Verbindungsstellen (13) der Dichtelementhälften (11,12) alternierend zwischen dem ersten axialen Ende (22) und dem zweiten axialen Ende (23) der jeweiligen Dichtelementhälfte (11,12) angeordnet sind.

8. Kabeleinführung (1) gemäss einem der vorangehenden Patentansprüche 4 oder 5, **dadurch gekennzeichnet, dass** in axialer Richtung mehrere Verbindungsstellen (13) entlang einer Längskante (14) der Dichtelementhälften (11,12) angeordnet sind.

9. Kabeleinführung (1) gemäss einem der vorangehenden Patentansprüche, **dadurch gekennzeichnet, dass** die stapelbaren Schichten (10) zueinander und/oder das Dichtelement (8) zu dem Klemmelement (4) mindestens eine Verdrehsicherung (15) umfassen.

10. Kabeleinführung (1) gemäss einem der vorangehenden Patentansprüche, **dadurch gekennzeichnet, dass** die erste Klemmhälfte (6) und die zweite Klemmhälfte (7) ein Positioniermittel (16) umfassen zum Positionieren der erste und zweiten Klemmhälften (6, 7) zueinander.

11. Kabeleinführung (1) gemäss Patentanspruch 10, **dadurch gekennzeichnet, dass** das Positioniermittel (16) eine Feder-Nut Verbindung und/oder ein ineinandergreifendes Profil ist.

12. Kabeleinführung (1) gemäss einem der vorangehenden Patentansprüche, **dadurch gekennzeichnet, dass** die erste Durchführöffnung (5) mehrere in axialer Richtung (x) hintereinander angeordnete und in radialer Richtung umlaufende Taschen (17) aufweist.

13. Kabeleinführung (1) gemäss Patentanspruch 9 und 12, **dadurch gekennzeichnet, dass** die mindestens eine Verdrehsicherung (15) innerhalb einer der Taschen (17) angeordnet ist.

14. Kabeleinführung (1) gemäss einem der vorangehenden Patentansprüche, **dadurch gekennzeichnet, dass** die stapelbaren Schichten (10) dünnwandig ausgestaltet sind und einer Kontur der ersten Durchführöffnung (5) folgen.

15. Kabeleinführung (1) gemäss einem der vorangehenden Patentansprüche, **dadurch gekennzeichnet, dass** die stapelbaren Schichten (10) ohne Zwischenraum ineinandergreifen.
